Europäisches Patentamt

European Patent Office

Office européen des brevets

(11) Publication number : **0 501 804 A2**

# (12) EUROPEAN PATENT APPLICATION

(21) Application number : **92301674.5**

(22) Date of filing : **27.02.92**

(51) Int. Cl.⁵ : **H04N 5/92**

(30) Priority : **28.02.91 JP 59489/91**

(43) Date of publication of application :
**02.09.92 Bulletin 92/36**

(84) Designated Contracting States :
**DE GB NL**

(71) Applicant : **NEC CORPORATION**
**7-1, Shiba 5-chome Minato-ku**
**Tokyo 108-01 (JP)**

(72) Inventor : **Oshio, Kimikazu**
**c/o NEC Corporation, 7-1 Shiba 5-chome**
**Minato-ku, Tokyo 108-01 (JP)**

(74) Representative : **Abnett, Richard Charles et al**
**REDDIE & GROSE 16 Theobalds Road**
**London WC1X 8PL (GB)**

(54) **Audio signal demultiplexer for a video tape recorder.**

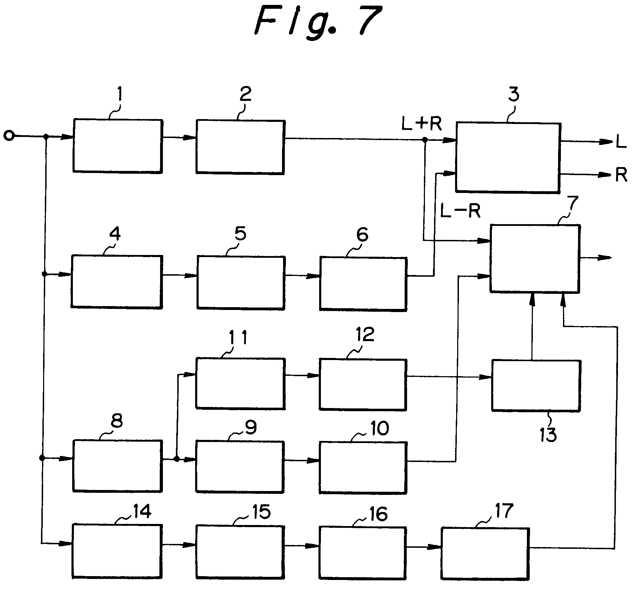

(57)  An audio signal demultiplexer for use with a video tape recorder has a monaural signal extracting circuit (1,2) for extracting an unmodulated monaural signal from a multiplexed audio signal of a television broadcast, a subaudio signal extracting circuit (8,9,10) for extracting a subaudio signal in a frequency-modulated carrier from the multiplexed audio signal, and a selector switch (7) for selecting either the monaural signal extracted by the monaural signal extracting circuit or the subaudio signal extracted by the subaudio signal extracting circuit. A comparator (13) determines whether there is a subaudio signal contained in the multiplexed audio signal by determining whether the carrier is contained in the multiplexed audio signal and causes the selector switch (7) to select in dependence upon whether a subaudio signal is contained in the multiplexed audio signal. To avoid false detection of noise, a noise detector circuit (14,15,16,17 ; Fig.7) may be included to override the comparator (13).

*Fig. 6*

## BACKGROUND OF THE INVENTION

The present invention relates to an audio signal demultiplexer for use with a video tape recorder for recording television broadcasts with a multiplexed audio signal.

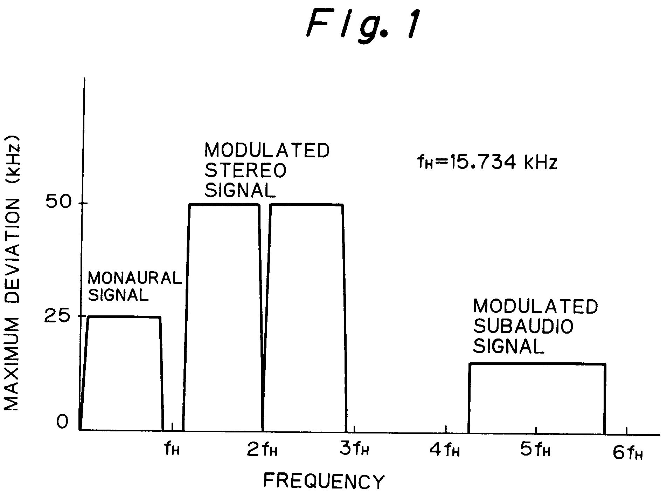

If it is assumed that television broadcasts with a multiplexed audio signal in the U.S. have a horizontal scanning frequency $f_H$ of 15.734 kHz, then the multiplexed audio signal is a composite signal comprising a monaural signal (L+R), a modulated stereo signal, and a modulated subaudio signal that are mixed according to a frequency distribution as shown in FIG. 1. The monaural signal (L+R) is preemphasized and contained in unmodulated form in a frequency range below the horizontal scanning frequency $f_H$. The modulated stereo signal is encoded according to the dbx (trademark) noise reduction system and is contained as a signal composed of a carrier of a frequency $2f_H$ amplitude-modulated by a stereo signal (L-R) in a frequency range from $f_H$ to $3f_H$ with a central frequency of $2f_H$. The modulated subaudio signal is also encoded according to the dbx noise reduction system and is contained in a frequency range from $4f_h$ to $6f_h$ with a central frequency of $5f_H$. The main carrier of a broadcast wave is frequency-modulated by this audio multiplexed signal for broadcast transmission.

A video tape recorder for recording a television broadcast with such a multiplexed audio signal generally records audio signals on 2-channel HiFi audio signal tracks and a 1-channel normal audio signal track. An audio signal demultiplexer, which may be included in or externally connected to such a video tape recorder, operates to record each of the two original stereo signals, L and R, on respective HiFi audio signal tracks and also records either the monaural or subaudio signal on the normal audio signal track.

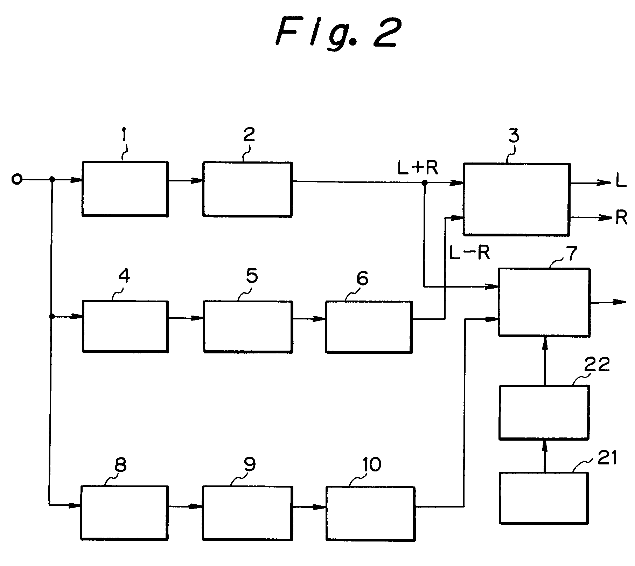

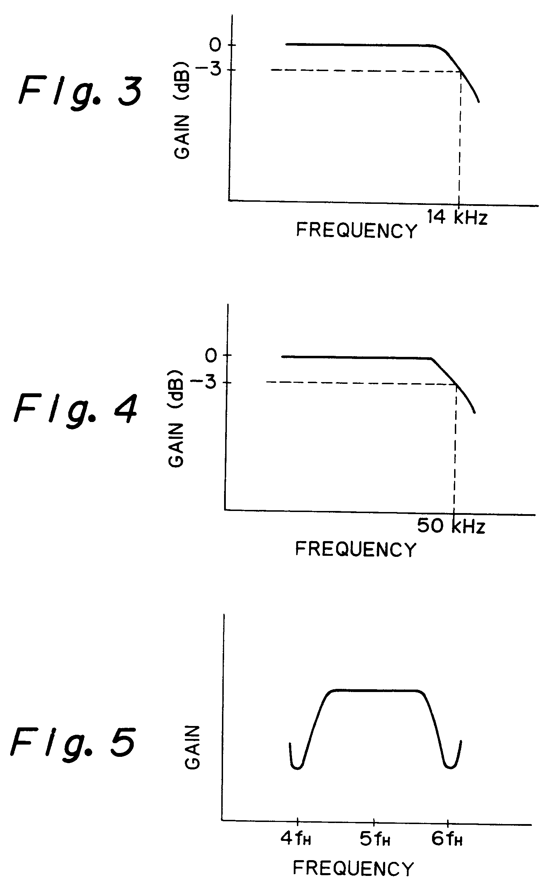

FIG. 2 shows a conventional audio signal demultiplexer for use with a video tape recorder. The conventional audio signal demultiplexer has a first low-pass filter 1, having the frequency characteristics shown in FIG. 3, for extracting a monaural signal (L+R) contained in a multiplexed audio signal that is transmitted from a broadcasting station. The monaural signal (L+R) that has passed through the low-pass filter 1 is then applied to a deemphasis circuit 2 which restores the original high-frequency components that were preemphasized at the broadcasting station before transmission. In cases where the multiplexed audio signal transmitted from the broadcasting station contains a modulated stereo signal, the modulated stereo signal is extracted by a second low-pass filter 4 having the frequency characteristics shown in FIG. 4. The modulated stereo signal that has passed through the low-pass filter 4 is then amplitude-demodulated into a stereo signal (L-R) by a stereo signal demodulator circuit 5. The stereo signal (L-R) is supplied to a first dbx noise reduction decoder 6 by which the stereo signal as encoded according to the dbx noise reduction system in the broadcasting station is decoded. In cases where the multiplexed audio signal transmitted from the broadcasting station contains a modulated subaudio signal, the modulated subaudio signal is extracted by a bandpass filter 8 having the frequency characteristics shown in FIG. 5. The modulated subaudio signal that has, passed through the bandpass filter 8 is then frequency-demodulated into a subaudio signal by a subaudio signal demodulator circuit 9. The subaudio signal is then supplied to a second dbx noise reduction decoder 10 which decodes the subaudio signal as encoded according to the dbx noise reduction system in the broadcasting station.

The monaural signal (L+R) from the deemphasis circuit 2 and the stereo signal (L-R) from the first dbx noise reduction decoder 6 are supplied to a matrix circuit 3 by which they are decoded into the two original stereo signals, L and R. The two original stereo signals L and R are each recorded on the HiFi audio signal tracks in the video tape recorder. The monaural signal (L+R) from the deemphasis circuit 2 and the subaudio signal from the second dbx noise reduction decoder 10 are supplied to a selector switch 7, which selects one of the supplied signals under the control of a microcomputer 22 according to the instructions of the viewer by means of a remote controller 21. The selected monaural signal (L+R) or subaudio signal is then recorded onto a normal audio signal track in the video tape recorder.

With the conventional audio signal multiplexer shown in FIG. 2, the viewer selects the signal to be recorded on the normal audio signal track. This means that the viewer is required to judge whether the subaudio signal is contained in the multiplexed audio signal transmitted from the broadcasting station and to operate the remote controller 21 accordingly. Since very few television broadcasts transmitted from broadcasting stations in the U.S. contain subaudio signals in multiplexed audio signals, we have appreciated that it is extremely inconvenient for the viewer to determine whether the subaudio signal is contained in each and every multiplexed audio signal that is transmitted.

While the example given is in terms of U.S. numerical values it will be appreciated that this description is not limited thereto and the minor adjustments required in accordance with European standards can readily be made by the reader.

## SUMMARY OF THE INVENTION

In accordance with the present invention, there is provided an audio signal demultiplexer for use with a video tape recorder which comprises: monaural signal extracting means for extracting an unmodulated monaural signal from a multiplexed audio signal of a television broadcast, subaudio signal extracting means for extracting a subaudio signal on a frequency-modulated carrier from the multiplexed audio signal, selector means for selecting either the monaural signal extracted by the monaural signal extracting means or the subaudio signal extracted by the subaudio signal extracting means, and determining means for determining whether a subaudio signal is contained in the multiplexed audio signal by determining whether the carrier is contained in the multiplexed audio signal and for causing the selector means to select in dependence upon whether a subaudio signal is contained in the multiplexed audio signal.

## BRIEF DESCRIPTION OF THE DRAWINGS

The features and advantages of the present invention will become apparent from the following description when taken in conjunction with the accompanying drawings in which:

FIG. 1 is a diagram showing the frequency distribution of a multiplexed audio signal of a television broadcast in the U.S.;

FIG. 2 is a block diagram of a conventional audio signal demultiplexer for use with a video tape recorder;

FIG. 3 is a diagram showing the frequency characteristics of a first low-pass filter in the conventional audio signal demultiplexer shown in FIG. 2;

FIG. 4 is a diagram showing the frequency characteristics of a second low-pass filter in the conventional audio signal demultiplexer shown in FIG. 2;

FIG. 5 is a diagram showing the frequency characteristics of a bandpass filter in the conventional audio signal demultiplexer shown in FIG. 2;

FIG. 6 is a block diagram of an audio signal demultiplexei for use with a video tape recorder according to the first embodiment of the present invention;

FIG. 7 is a block diagram of an audio signal demultiplexer for use with a video tape recorder according to the second embodiment of the present invention; and

FIG. 8 is a diagram showing the frequency characteristics of a second low-pass filter in the audio signal demultiplexer shown in FIG. 7.

## DESCRIPTION OF THE PREFERRED EmbODIMENTS

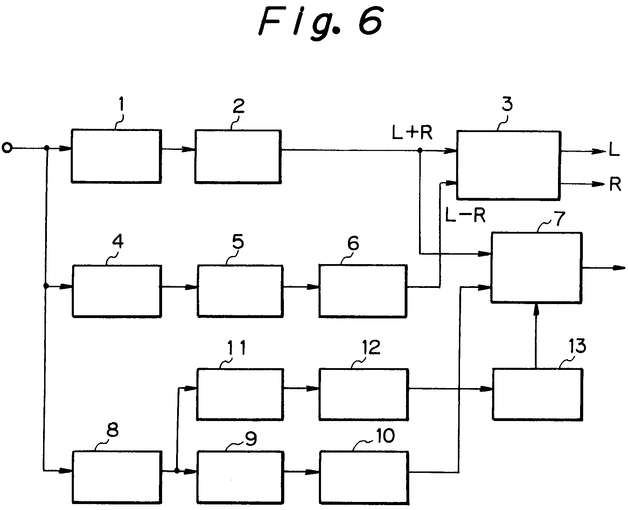

As shown in FIG. 6, an audio signal demultiplexer according to the first embodiment of the present invention differs from the conventional audio signal demultiplexer shown in FIG. 2 in that it does not have remote controller 21 or microcomputer 22 shown in FIG. 2 but has a full-wave rectifying circuit 11, a DC smoothing circuit 12, and a comparator 13. The full-wave rectifying circuit 11 rectifies the modulated subaudio signal which is the output signal from the bandpass filter 8. The DC smoothing circuit 12 smooths the rectified modulated subaudio signal from the full-wave rectifying circuit 11 into a DC signal. The comparator 13 compares the voltage of the DC signal from the DC smoothing circuit 12 which is delivered to one of its input terminals with a predetermined reference signal applied to another of its input terminals to determine whether or not there is a subaudio signal contained in the multiplexed audio signal transmitted from the broadcasting station. The comparator 13 controls the selector switch 7 according to the result of the comparison.

The audio signal demultiplexer shown in FIG. 6 operates as follows: a monaural signal (L+R) contained in a multiplexed audio signal that is transmitted from a broadcasting station is extracted by the first low-pass filter 1. The monaural signal (L+R) that has passed through the low-pass filter 1 is then applied to the deemphasis circuit 2 which restores any original high-frequency components that have been preemphasized in the broadcasting station before transmission. In cases where the multiplexed audio signal transmitted from the broadcasting station contains a modulated stereo signal, the modulated stereo signal is extracted by the second low-pass filter 4. The modulated stereo signal that has passed through the low-pass filter 4 is then amplitude-demodulated into a stereo signal (L-R) by the stereo signal demodulator circuit 5. The stereo signal (L-R) is supplied to the first dbx noise reduction decoder 6 by which the stereo signal (L-R) as encoded according to the dbx noise reduction system in the broadcasting station is decoded. In cases where the multiplexed audio signal transmitted from the broadcasting station contains a modulated subaudio signal, the modulated subaudio signal is extracted by the bandpass filter 8. The modulated subaudio signal that has passed through the bandpass filter 8 is then frequency-demodulated into a subaudio signal by the subaudio signal demodulator circuit 9. The subaudio signal is then supplied to the second dbx noise reduction decoder 10 which decodes the subaudio signal as encoded according to the dbx noise reduction system in the broadcasting station.

The monaural signal (L+R) from the deemphasis circuit 2 and the stereo signal (L-R) from the first dbx noise reduction decoder 6 are supplied to the matrix circuit 3 by which they are decoded into two original stereo signals, L and R. The two original stereo signals L and R are each recorded on HiFi audio signal tracks in the video tape recorder. The monaural signal (L+R) from the deemphasis circuit 2 and the subaudio signal from the second dbx noise reduction decoder 10 are supplied to the selector switch 7 which selects one of the supplied signals.

The selection by the selector switch 7 of either the monaural signal (L+R) or the subaudio signal is effected as follows: the modulated subaudio signal from the full-wave rectifying circuit 11 is converted into a smooth DC signal by the DC smoothing circuit 12 as described above. The DC signal from the DC smoothing circuit 12 is then applied to the comparator 13 by which it is compared with the predetermined reference signal. If the multiplexed audio signal transmitted from the broadcasting station contains no modulated subaudio signals, the voltage of the DC signal will be lower than the predetermined reference signal because no carrier having a frequency of $5f_H$ is transmitted by the broadcasting station. On the other hand, if the multiplexed audio signal transmitted from the broadcasting station does contain a modulated subaudio signal, the voltage of the DC signal will be higher than the predetermined reference signal because a carrier having a frequency of $5f_H$ is transmitted from the broadcasting station. Therefore, the comparator 13 is capable of automatically determining whether the multiplexed audio signal contains a modulated subaudio signal or not. The selector switch 7 is shifted depending on the output signal from the comparator 13. In cases where the multiplexed audio signal contains a modulated subaudio signal, the selector switch 7 is controlled by the comparator 13 to select the subaudio signal and record the subaudio signal onto the normal audio signal track in the video tape recorder. In cases where the multiplexed audio signal does not contain any modulated subaudio signal, the selector switch 7 will be controlled by the comparator 13 to select the monaural signal (L+R) and record the monaural signal (L+ R) on the normal audio signal track.

As shown in FIG. 7, an audio signal demultiplexer according to the second embodiment of the present invention differs from the audio signal demultiplexer according to the first embodiment shown in FIG. 6 in that it additionally has a second bandpass filter 14, a second full-wave rectifying circuit 15, a second DC smoothing circuit 16, and a second comparator 17. The second bandpass filter 14 serves to extract noise signals having a frequency range higher than that of the subaudio signal contained in the multiplexed audio signal transmitted from the broadcasting station. The second full-wave rectifying circuit 15 rectifies the output noise signal from the second bandpass filter 14. The second DC smoothing circuit 16 smooths the rectified noise signal from the second full-wave rectifying circuit 15 into a DC noise signal. The second comparator 17 compares the voltage of the DC noise signal from the second DC smoothing circuit 16 applied to one of its input terminals with a predetermined second reference signal applied to another of its input terminals in order to determine the relative magnitudes of the noise signals and controls the selector switch 7 depending on the determined relative magnitude of the noise signals.

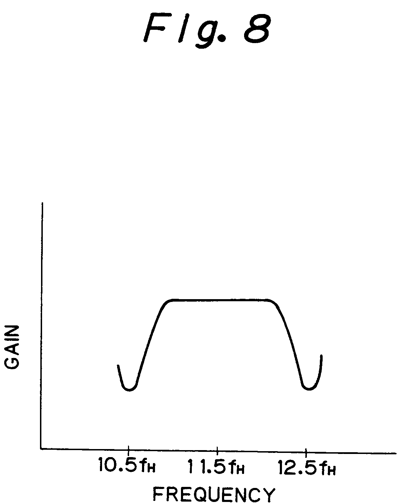

The second bandpass filter 14 has a passing band having a central frequency higher than the frequencies of the harmonics of the carrier of the modulated stereo signal and the frequencies of the harmonics of the carrier of the modulated subaudio signal. For example, the second bandpass filter 14 has a passing band having a central frequency of $11.5f_H$, as shown in FIG. 8. Therefore, the second bandpass filter 14 extracts the noise signal in the frequency band higher than that of the modulated subaudio signal of the multiplexed audio signal transmitted from the broadcasting station. The noise signal that has passed through the second bandpass filter 14 is supplied to the second full-wave rectifying circuit 15, by which it is rectified. The rectified noise signal from the second full-wave rectifying circuit 15 is then supplied to the DC smoothing circuit 16 which converts the noise signal into a smoothed DC noise signal. The second comparator 17 compares the voltage of the DC noise signal from the DC smoothing circuit 16 with the second reference voltage. If the voltage of the DC noise signal is higher than the second reference voltage, no modulated subaudio signal is contained in the multiplexed audio signal transmitted from the broadcasting station, even when the comparator 13 determines that the multiplexed audio signal contains a modulated subaudio signal. Therefore, the comparator 13 is judged to be malfunctioning due to noise, and as a result, the second comparator 17 causes the selector switch 7 to select a monaural signal (L+R) irrespective of the decision made by the comparator 13. If the voltage of the DC noise signal is lower than the second reference voltage, the second comparator 17 causes the selector switch 7 to select either the monaural signal (L+R) or the subaudio signal depending on the decision made by the comparator 13. Consequently, the audio signal demultiplexer according to the second embodiment shown in FIG. 7 is to some extent capable of determining whether the transmitted multiplexed audio signal contains a subaudio signal or not, even when the comparator 13 malfunctions in geographic regions where the electric-field intensity is relatively weak.

While this invention has been described in conjunction with the preferred embodiments thereof, it would now be possible for one skilled in the art to put this invention into practice in various other manners.

## Claims

1. An audio signal demultiplexer for use with a video tape recorder, comprising:

monaural signal extracting means (1,2) for extracting an unmodulated monaural signal from a multiplexed audio signal of a television broadcast;

subaudio signal extracting means (8,9,10) for extracting a subaudio signal on a frequency-modulated carrier from said multiplexed audio signal; and

selector means (7) for selecting either said monaural signal extracted by said monaural signal extracting means or said subaudio signal extracted by said subaudio signal extracting means; characterized by

determining means (11,12,13) for determining whether said subaudio signal is contained in said multiplexed audio signal by determining whether said carrier is contained in said multiplexed audio signal, and for causing said selector means to select in dependence upon whether said subaudio signal is contained in said multiplexed audio signal.

2. An audio signal demultiplexer according to claim 1, wherein said subaudio signal extracting means comprises a bandpass filter (8) for extracting said subaudio signal from said multiplexed audio signal; and said determining means comprises a full-wave rectifying circuit (11) for rectifying an extracted output signal from said bandpass filter, a DC smoothing circuit (12) for smoothing a rectified output signal from said fullwave rectifying circuit into a DC signal, and a comparator (13) for converting said DC signal from said DC smoothing circuit into a binary signal.

3. An audio signal demultiplexer according to claim 2, wherein said comparator (13) has an input terminal supplied with a predetermined reference voltage and another input terminal supplied with said DC signal, and said comparator causes said selector means to select said subaudio signal when the voltage of said DC signal is higher than said reference voltage.

4. An audio signal demultiplexer according to any of claims 1 to 3, further including noise signal extracting means (14,15,16,17) for extracting a noise signal contained in said multiplexed audio signal having a frequency band higher than that of said carrier and causing said selector means to select said monaural signal when said extracted noise signal is of a lever higher than a predetermined level.

5. An audio signal demultiplexer according to claim 4, wherein said noise signal extracting means comprises a second bandpass filter (14) for extracting said noise signal from said multiplexed audio signal, a second full-wave rectifying circuit (15) for rectifying an extracted output signal from said second bandpass filter, a second DC smoothing circuit (16) for smoothing a rectified output signal from said second full-wave rectifying circuit into a DC noise signal, and a second comparator (17) for converting said DC noise signal from said second DC smoothing circuit into a binary signal.

6. An audio signal demultiplexer according to claim 5, wherein said second comparator (17) has an input terminal supplied with a predetermined second reference voltage and another input terminal supplied with said DC noise signal and controls said selector means to select said monaural signal when the voltage of said DC noise signal is higher than said second reference voltage.

7. An audio signal demultiplexer according to any of claims 1 to 6, further including receiving means for receiving said multiplexed audio signal which contains no carrier when said subaudio signal is not contained in said multiplexed audio signal and outputting either said monaural signal or said subaudio signal.

8. An audio signal demultiplexer according to any of claims 1 to 7, wherein said monaural signal comprises the sum of two original stereo signals, and a stereo signal representative of the difference between said two original stereo signals is contained in said multiplexed audio signal on an amplitude-modulated carrier; and further including stereo signal extracting means (4,5,6) for extracting said stereo signal from said multiplexed audio signal; and

restoring means (3) for restoring said two original stereo signals from said stereo signal extracted by said stereo signal extracting means and said monaural signal extracted by said monaural signal extracting means.

9. A video tape recorder provided with an audio signal demultiplexer in accordance with any of claims 1 to 8.

Fig. 1

MAXIMUM DEVIATION (kHz)

MONAURAL
SIGNAL

MODULATED
STEREO
SIGNAL

$f_H$=15.734 kHz

MODULATED
SUBAUDIO
SIGNAL

50

25

0

$f_H$    2$f_H$    3$f_H$    4$f_H$    5$f_H$    6$f_H$

FREQUENCY

Fig. 2

*F I g. 3*

*F I g. 4*

*F I g. 5*

Fig. 6

EP 0 501 804 A2

Fig. 7

# Fig. 8